Europäisches Patentamt

European Patent Office

Office européen des brevets

(11) Numéro de publication : **0 324 297 B1**

(12) **FASCICULE DE BREVET EUROPEEN**

(45) Date de publication du fascicule du brevet :
**13.05.92 Bulletin 92/20**

(51) Int. Cl.⁵ : **B62D 57/02, B64F 5/00**

(21) Numéro de dépôt : **88403350.7**

(22) Date de dépôt : **28.12.88**

(54) **Mobile autonome pour le transport d'un outil à vitesse constante.**

(30) Priorité : **31.12.87 FR 8718478**

(43) Date de publication de la demande :
**19.07.89 Bulletin 89/29**

(45) Mention de la délivrance du brevet :
**13.05.92 Bulletin 92/20**

(84) Etats contractants désignés :
**BE DE ES GB IT NL SE**

(56) Documents cités :
**EP-A- 0 084 012**
**GB-A- 2 151 671**

(73) Titulaire : **AEROSPATIALE Société Nationale Industrielle**
**37, Boulevard de Montmorency**
**F-75781 Paris Cédex 16 (FR)**

(72) Inventeur : **Castelain, Yves**
**Chemin Vieux-Segoufielle**
**F-32600 L'Isle Jourdain (FR)**
Inventeur : **Jaubert, Philippe**
**Bachayre**
**F-32430 Cologne (FR)**
Inventeur : **Peltier, René**
**12 Chemin de la Butte**
**F-31770 Colomiers (FR)**

(74) Mandataire : **Mongrédien, André et al**
**c/o SOCIETE DE PROTECTION DES INVENTIONS 25, rue de Ponthieu**
**F-75008 Paris (FR)**

## Description

L'invention concerne un mobile autonome apte à déplacer un outil de travail à vitesse constante sur une surface de forme et d'orientation quelconques. Elle a été conçue et mise au point par le Département Production Recherche de l'Aérospatiale de Toulouse avec l'aide de "Junior Entreprise" de l'Ecole Nationale Supérieure d'Ingénieurs de Constructions Aéronautiques (Projets Industriels).

Un tel mobile peut être utilisé avantageusement pour effectuer différents travaux, tels que des opérations de décapage, de ponçage, de peinture ou de décoration, sur la surface extérieure d'un aéronef. Cette application n'est toutefois pas limitative et on comprendra aisément qu'un mobile de ce type peut être utilisé dans d'autres secteurs industriels, à chaque fois que l'exécution d'une tâche sur une surface plane ou courbe, et d'orientation quelconque, nécessite de déplacer un outil à vitesse constante parallèlement à cette surface, en maintenant pratiquement constante la distance séparant l'outil de la surface.

Dans l'ensemble du texte, le mot "outil" doit être pris dans son sens le plus large, c'est-à-dire qu'il désigne indifféremment un outillage mécanique tel qu'un outil de ponçage, un dispositif effectuant un traitement physique ou chimique de la surface, tel qu'un dispositif de dégraissage à l'aide de solvants, un pistolet de peinture, etc.

Actuellement, les opérations effectuées sur les surfaces extérieures des aéronefs avant leur livraison sont généralement effectuées manuellement.

C'est ainsi que le personnel affecté à ces tâches effectue à la main successivement une opération de dégraissage des surfaces, une opération de ponçage, pour terminer par la phase de peinture.

Dans sa forme actuelle, ce travail a un aspect polluant, pénible et fastidieux pour le personnel. De plus, la durée de ces opérations manuelles de finition est relativement longue et augmente les délais de livraison des aéronefs.

Jusqu'à présent, il n'existe aucun appareil permettant de remplacer l'homme dans cette tâche. En effet, un tel appareil devrait satisfaire à de nombreuses exigences liées, d'une part, au caractère très variable de la forme et de l'orientation de la surface et, d'autre part, aux conditions de travail de l'outil. Ainsi, pour que l'outil travaille dans des conditions satisfaisante, il doit se déplacer à une distance approximativement constante de la surface, et surtout à une vitesse constante parallèlement à cette surface. De préférence, un changement d'orientation de la trajectoire de l'outil doit également être possible, sans que la vitesse de déplacement de ce dernier en soit modifiée.

Le document EP-A-0 084 012 décrit un appareil dans lequel un ou plusieurs outils sont montés sur au moins un d'une paire d'ensembles aptes à s'accrocher sur une surface à traiter et à se déplacer l'un par rapport à l'autre. Lorsqu'un ensemble est accroché, le ou les outils qu'il supporte restent immobiles.

L'invention a précisément pour object un mobile autonome comportant un porte-outil conçu pour se déplacer à vitesse constante parallèlement à la surface, indépendamment de la vitesse de déplacement des autres éléments du mobile, de telle sorte que l'outil peut effectuer les tâches précitées de façon autonome, ce qui améliore sensiblement les conditions de travail et réduit la durée d'exécution de ces tâches.

Conformément à l'invention, ce résultat est obtenu au moyen d'un mobile autonome apte à déplacer un outil de travail sur une surface de forme et d'orientation quelconques, ce mobile comprenant:

– deux ensembles d'accrochage coopérant entre eux par des moyens de guidage autorisant un déplacement relatif entre ces ensembles selon une direction donnée, chacun des ensembles d'accrochage portant des organes d'accrochage aptes à adhérer sur ladite surface et des moyens pour déplacer ces organes d'accrochage en rapprochement et en éloignement de cette surface, et

– un ensemble porte-outil supporté par l'un au moins des ensembles d'accrochage;

ledit mobile étant caractérisé par le fait qu'il est apte à déplacer l'outil à vitesse constante, l'ensemble porte-outil coopérant avec l'ensemble d'accrochage qui le supporte par des moyens de guidage autorisant son déplacement selon ladite direction, ledit mobile comprenant de plus des moyens de commande dont l'actionnement assure le passage du mobile dans deux états de déplacement successifs et répétitifs ; un premier de ces états, dans lequel les organes d'accrochage d'un seul des ensembles d'accrochage, dit fixe, adhèrent sur ladite surface, assurant un déplacement simultané de l'ensemble porte-outil et de l'autre ensemble d'accrochage, dit mobile, dans ladite direction, respectivement à une vitesse relativement faible et à une vitesse relativement élevée ; le deuxième état permettant de permuter les ensembles d'accrochage fixe et mobile du premier état, assurant une immobilisation relative des deux ensembles d'accrochage et un déplacement de l'ensemble porte-outil dans ladite direction et à ladite vitesse relativement faible par rapport aux ensembles d'accrochage.

Dans un mobile ainsi conçu, le porte-outil et, par conséquent, l'outil se déplacent toujours dans la même direction et à une vitesse constante correspondant à ladite vitesse relativement faible, alors que le reste du mobile se déplace par reptation, l'un des ensembles d'accrochage étant projeté en avant à une vitesse plus élevée que la vitesse de déplacement du porte-outil, lorsque les organes d'accrochage de l'autre ensemble d'accrochage adhèrent sur la surface, et inversement. Grâce au "deuxième état" de fonctionnement, le rôle des deux ensembles d'accrochage est permuté sans que l'avance du porte-outil à vitesse constante soit interrompue.

De préférence, afin que la longueur du mobile soit aussi réduite que possible, la vitesse relativement, élevée à laquelle les ensembles d'accrochage sont tour à tour projetés en avant est au moins égale à deux fois la vitesse constante et relativement faible à laquelle se déplace le porte-outil.

Selon un mode de réalisation préféré de l'invention, les moyens de commande comprennent un organe moteur unique porté par l'ensemble porte-outil, cet organe moteur actionnant, respectivement par l'intermédiaire de quatre embrayages un premier moyen d'entraînement assurant un déplacement relatif à ladite vitesse relativement faible entre un premier des ensembles d'accrochage et l'ensemble porte-outil, un deuxième moyen d'entraînement assurant un déplacement relatif à ladite vitesse relativement élevée entre le premier ensemble d'accrochage et l'ensemble porte-outil, un troisième moyen d'entraînement assurant un déplacement relatif à ladite vitesse relativement faible entre le deuxième ensemble d'accrochage et l'ensemble porte-outil et un quatrième moyen d'entraînement assurant un déplacement relatif à ladite vitesse relativement élevée entre le deuxième ensemble d'accrochage et l'ensemble porte-outil, les déplacements commandés par le deuxième et le quatrième moyens d'entraînement s'effectuant en sens opposé par rapport aux déplacements commandés par le premier et le troisième moyens d'entraînement.

Le premier et le deuxième moyens d'entraînement peuvent notamment comprendre deux crémaillères opposées, portées par le premier ensemble d'accrochage selon ladite direction, et un premier et un deuxième pignons montés sur l'ensemble porte-outil et engrenés respectivement sur ces crémaillères opposées, le troisième et le quatrième moyens d'entraînement comprenant deux autres crémaillères opposées, portées par le deuxième ensemble d'accrochage selon ladite direction et un troisième et un quatrième pignons montés sur l'ensemble porte-outil et engrenés respectivement sur ces autres crémaillères opposées, l'organe moteur entraînant ces quatre pignons à la même vitesse et dans le même sens, par des moyens de transmission de mouvement comportant les quatre embrayages.

Dans ce cas, les moyens de transmission comprennent, par exemple, au moins une courroie entraînée par l'organe moteur et passant sur quatre poulies supportées par l'ensemble porte-outil et dont les axes entraînent respectivement lesdits pignons par l'intermédiaire des quatre embrayages.

Selon un autre aspect de l'invention, afin de permettre un changement d'orientation de la trajectoire de l'outil, le deuxième ensemble d'accrochage comporte une partie mobile selon ladite direction par rapport au premier ensemble d'accrochage et une partie rotative apte à tourner par rapport à la partie mobile autour d'un axe perpendiculaire à ladite direction et à ladite surface, des moyens étant prévus pour commander une rotation relative entre ces parties mobile et rotative autour dudit axe, lesdits organes d'accrochage étant supportés par la partie rotative. Il est à noter que le changement d'orientation de la trajectoire obtenu par une rotation relative entre les parties mobile et rotative du deuxième ensemble d'accrochage est sans incidence sur la vitesse de déplacement de l'outil par rapport à la surface, qui reste constante.

Ces moyens pour commander ladite rotation relative peuvent notamment comprendre un organe moteur porté par ladite partie mobile, un pignon entraîné par cet organe moteur, et une crémaillère circulaire centrée sur ledit axe, portée par ladite partie rotative et sur laquelle s'engrène le pignon porté par la partie mobile.

Un mode de réalisation préféré de l'invention va maintenant être décrit, à titre d'exemple nullement limitatif, en se référant aux dessins annexés, dans lesquels :

 – la figure 1 est une vue en perspective représentant schématiquement un mobile autonome réalisé conformément à l'invention ;
 – la figure 2 est une vue de dessus du mobile de la figure 1 ;
 – la figure 3 est une vue en coupe transversale selon la ligne III-III de la figure 2, et
 – la figure 4 est une vue de dessus représentant à plus grande échelle l'agencement des courroies et des poulies portées par l'ensemble porte-outil et servant à commander les déplacements de cet ensemble, ainsi que les déplacements du mobile par rapport à la surface.

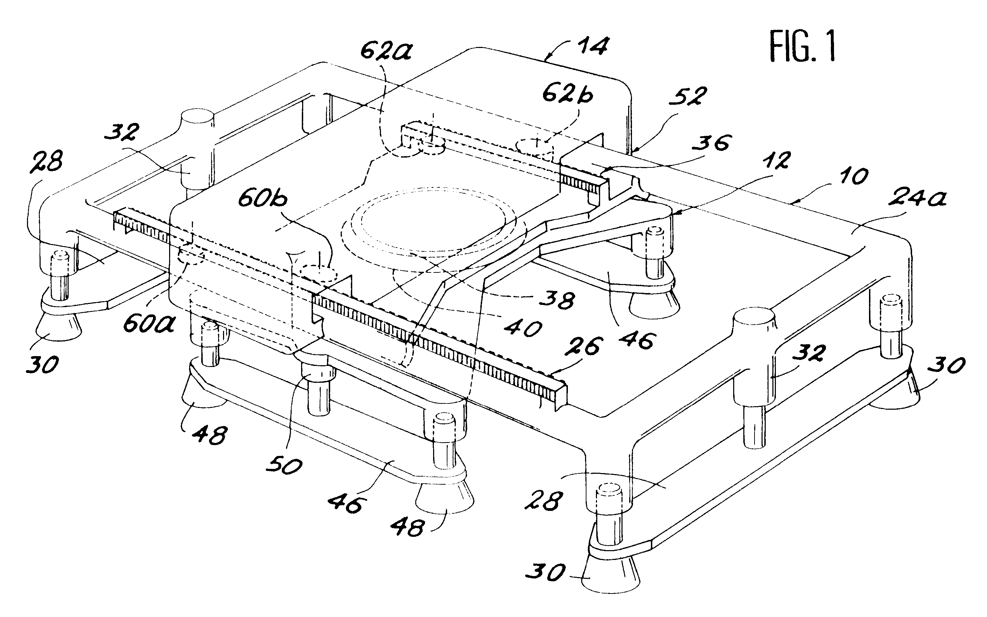

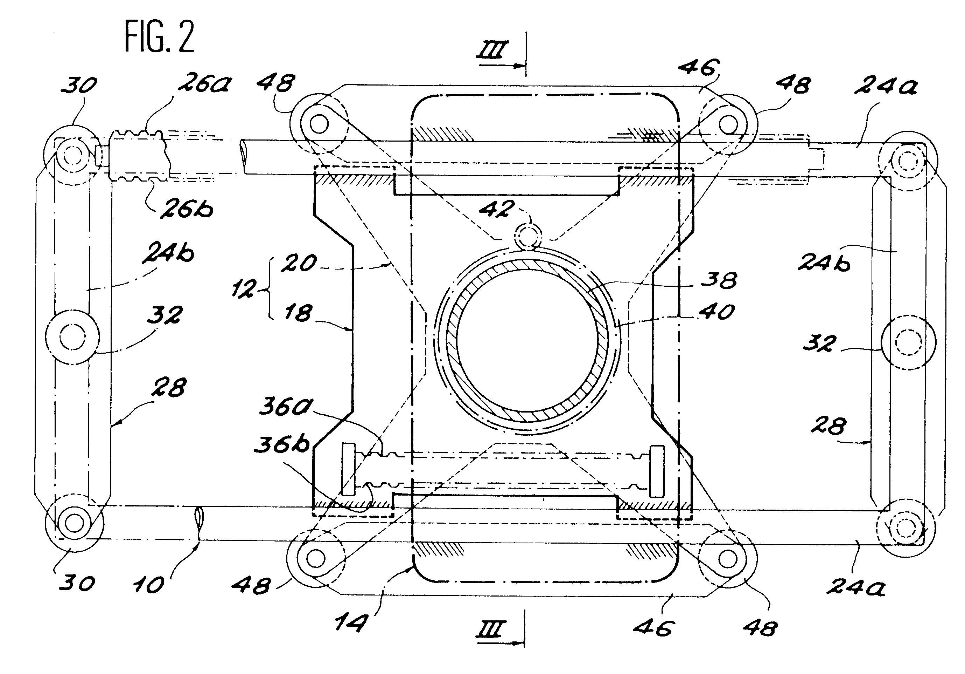

Comme l'illustrent les figures 1 à 3, le mobile autonome selon l'invention comprend principalement trois ensembles distincts, désignés respectivement par les références générales 10, 12 et 14.

Les ensembles 10 et 12 constituent respectivement un premier ensemble d'accrochage et un deuxième ensemble d'accrochage. Ils sont conçus pour pouvoir s'accrocher ou adhérer à tour de rôle sur la surface sur laquelle on désire exécuter une tâche. Ils disposent en outre d'un degré de liberté relative selon une direction donnée, approximativement parallèle à la surface lorsqu'au moins l'un d'entre eux est accroché sur cette dernière. Cette configuration permet un déplacement du mobile sur la surface selon ladite direction, par reptation, comme on le verra ultérieurement.

Le troisième ensemble 14 est un ensemble porte-outil. Il est supporté de façon coulissante par le premier ensemble d'accrochage 10 parallèlement à la direction précitée. Cet ensemble porte-outil 14 supporte les moyens de commande du mobile, désignés par la référence générale 16. Ces moyens de commande assurent simultanément, selon une caractéristique essentielle de l'invention, le déplacement du mobile par reptation des ensembles 10 et 12, et le déplacement à vitesse constante de l'ensemble porte-outil 14, dans la direction précitée.

Dans le mode de réalisation représenté, le mobile dispose en outre de moyens permettant de changer l'orientation de sa trajectoire, en modifiant l'orientation de la direction précitée par rapport à la surface. A cet effet, le deuxième ensemble d'accrochage 12 comprend une partie 18 supportée par le premier ensemble d'accrochage 10 et mobile selon ladite direction par rapport à cet ensemble, et une partie 20 montée rotative sur la partie 18, autour d'un axe perpendiculaire à ladite direction et à la surface. L'accrochage du deuxième ensemble d'accrochage sur la surface s'effectue par sa partie rotative 20. La commande de la rotation relative entre les parties 18 et 20 est assurée par des moyens de commande, désignés par la référence générale 22.

Une description plus précise des différents éléments du mobile autonome représenté sur les figures va maintenant être faite.

Le premier ensemble d'accrochage 10 comprend principalement un cadre rectangulaire rigide 24, réalisé par exemple en métal ou en matériau composite. Les deux grands côtés 24a de ce cadre 24 constituent des glissières servant au supportage et au guidage du deuxième ensemble d'accrochage 12 et de l'ensemble porte-outil 14 selon ladite direction. Cette direction d'avance du mobile et de déplacement de l'outil (non représenté) supporté par l'ensemble 14 est donc parallèle aux côtés 24a du cadre 24.

Deux crémaillères opposées 26a et 26b, formées sur une tige 26 constituant ainsi une double crémaillère, sont fixées sur le cadre 24. Plus précisément, la tige 26 et les crémaillères 26a et 26b sont orientées parallèlement aux grands côtés 24a du cadre 24, selon la direction précitée.

Chacun des petits côtés 24b du cadre 24 supporte un pied 28 apte à se déplacer selon une direction perpendiculaire au plan du cadre 24, par rapport à ce dernier. Les pieds 28 sont situés du même côté du plan formé par le cadre 24 et sont prévus pour venir en contact avec la surface de travail par des organes d'accrochage 30 tels que des ventouses à actionnement électromagnétique, pneumatique ou hydraulique. Le déplacement de chacun des pieds 28 par rapport au cadre 24 est commandé par un vérin 32 porté par le cadre 24, et guidé par exemple par des tiges solidaires des pieds 28 et s'étendant perpendiculairement au plan du cadre 24, au travers de passages formés à cet effet dans les petits côtés 24b du cadre 24.

La partie 18 du deuxième ensemble d'accrochage 12, qui est supportée par le premier ensemble d'accrochage 10 de façon à pouvoir coulisser selon ladite direction, comprend également un cadre rectangulaire rigide 34, réalisé par exemple en métal ou en matériau composite. Deux côtés parallèles et opposés 34a du cadre 34 sont agencés parallèlement aux grands côtés 24a du cadre 24, de façon à coulisser sur les surfaces intérieures des glissières formées par ces grands côtés 24a. La longueur de ces côtés 34a du cadre 34 est très inférieure à la longueur des côtés 24a du cadre 24, de façon à définir entre les ensembles d'accrochage 10 et 12 une course relative suffisamment grande selon ladite direction, pour que la permutation de l'accrochage de ces ensembles sur la surface intervienne le moins souvent possible.

Deux crémaillères opposées 36a et 36b, formées sur une tige 36 constituant ainsi une double crémaillère, sont fixées sur le cadre 34. Plus précisément, la tige 36 et les crémaillères 36a et 36b sont orientées parallèlement aux côtés 34a du cadre 34, selon la direction précitée. En outre, les tiges 26 et 36 sont disposées approximativement au même niveau par rapport au plan des cadres 24 et 34 et de part et d'autre du plan de symtrie des grand côtés 24a du cadre 24.

La partie 20 du deuxième ensemble d'accrochage 12 est reliée de façon pivotante à la partie 18, autour d'un axe passant par le centre du cadre 34 et orienté perpendiculairement au plan de ce cadre.

Cette partie tournante 20 comprend un cadre circulaire rigide 38, réalisé par exemple en métal ou en matériau composite, centré sur l'axe de rotation précité. La liaison pivotante entre les parties 18 et 20 est réalisée par tout moyen approprié, tel qu'un ensemble de galets portés par le cadre rectangulaire 34 et avec lequel coopère par sa périphérie extérieure le cadre circulaire 38.

Une crémaillère circulaire 40, également centrée sur l'axe de rotation de la partie 20, est formée sur le cadre circulaire 38. Sur cette crémaillère 40 s'engrène un pignon 42 dont l'axe parallèle à l'axe de rotation de la partie 20, est supporté par la partie 18 et entraîné en rotation par un organe moteur porté par la partie 18 et constitué dans l'exemple représenté par un motoréducteur 44. Ce motoréducteur 44 constitue, avec le pignon 42 et la crémaillère 40, les moyens 22 servant à commander la rotation relative entre les parties 18 et 20 du deuxième ensemble d'accrochage 12.

En deux emplacements diamétralement opposés et normalement situés sur les côtés du mobile par rapport à sa direction de déplacement, le cadre circulaire 38 supporte deux pieds 46 aptes à se déplacer selon une direction perpendiculaire au plan du cadre 38, par rapport à ce dernier. Les pieds 46 sont montés sur le cadre 38 du même côté que les pieds 28, de façon à pouvoir également venir en contact avec la surface de travail par des organes d'accrochage 48 tels que des ventouses électromagnétiques, pneumatiques ou hydrauliques. Le déplacement de chacun des pieds 46 par rapport au cadre 38 est commandé par un vérin 50 porté par le cadre 38, et guidé par exemple par des tiges solidaires des pieds 46 et disposés perpendiculairement au plan du cadre 38, au travers de passages formés à cet effet dans le cadre 38.

L'ensemble porte-outil 14 comprend également un cadre rectangulaire rigide 52, réalisé par exemple en métal ou en matériau composite. Deux côtés parallèles et opposés 52a du cadre 52 sont agencés parallèlement aux grands côtés 24a du cadre 24, de façon à coulisser sur les surfaces extérieures des glissières formées par ces grands côtés 24a. La longueur des côtés 52a est très inférieure à la longueur des côtés 24a, de façon à définir entre l'ensemble porte-outil 14 et le premier ensemble d'accrochage 10 une course relative suffisante selon la direction précitée, pour que l'ensemble porte-outil puisse se déplacer à vitesse constante sur l'ensemble 10 pendant toute la durée de l'accrochage de ce dernier sur la surface de travail.

L'ensemble porte-outil 14 est conçu pour supporter un ou plusieurs outils (non représentés) permettant de travailler sur cette surface. A cet effet, il est pourvu de moyens de supportage appropriés (non représentés).

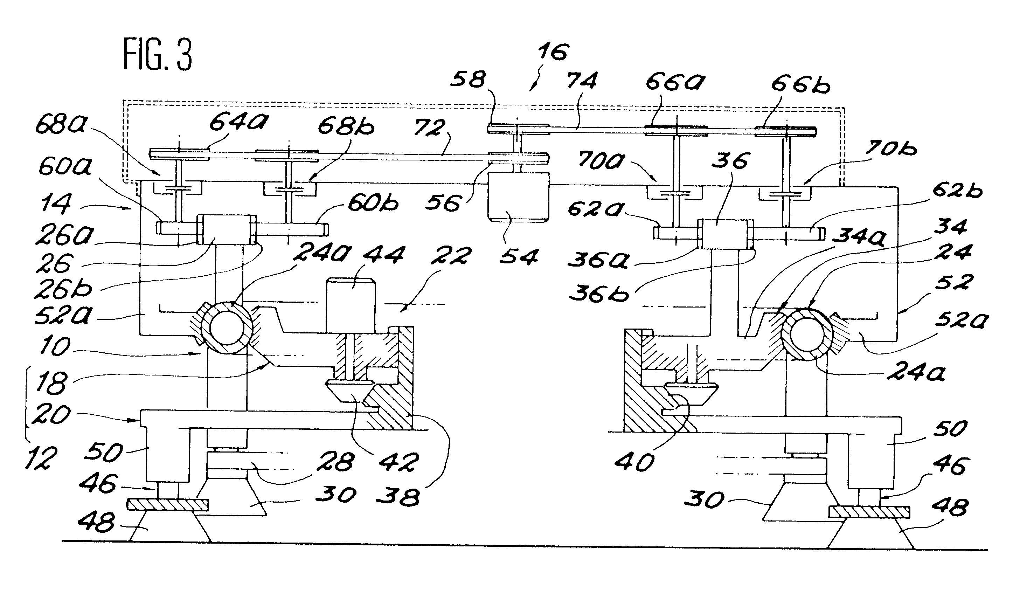

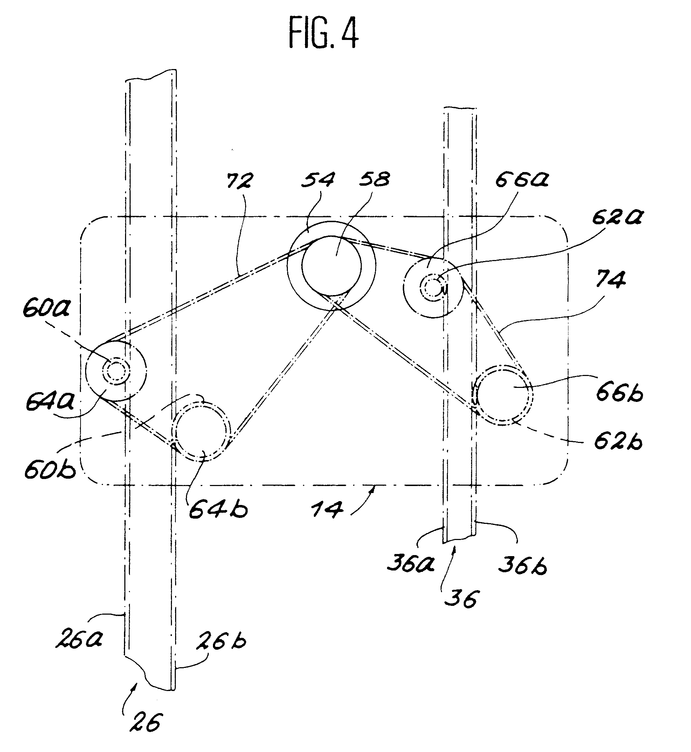

Des moyens 16 supportés par l'ensemble porte-outil 14 et permettant à la fois de commander le déplacement du mobile sur la surface et le déplacement à vitesse constante de l'ensemble 14 parallèlement à cette surface vont maintenant être décrits en se référant aux figures 3 et 4.

Ces moyens de commande 16 comprennent un organe moteur porté par le cadre 52 et constitué dans l'exemple représenté par un motoréducteur 54. L'axe de sortie de ce motoréducteur 54, orienté perpendiculairement au plan du cadre 52 et situé dans le plan de symétrie des grands côtés 24a du cadre 24, qui coïncide avec le plan de symétrie longitudinal du mobile, porte deux poulies crantées 56 et 58.

Ce cadre 52 de l'ensemble porte-outil 14 supporte également les axes, orientés perpendiculairement au plan du cadre 52, de quatre pignons 60a, 60b, 62a et 62b. L'agencement de ces pignons sur le cadre 52 est tel que les pignons 60a et 60b sont engrenés respectivement sur les crémaillères opposées 26a et 26b du premier ensemble d'accrochage 10 et que les pignons 62a et 62b sont engrenés respectivement sur les crémaillères opposées 36a et 36b de la partie 18 du deuxième ensemble d'accrochage 12. Les dentures des crémaillères 26a, 26b, 36a et 36b étant identiques, les pignons 60a et 62a qui sont engrenés respectivement sur la crémaillère 26a tournée vers l'extérieur du cadre 24 et sur la crémaillère 36a tournée vers l'intérieur du cadre 24 ont des diamères identiques et relativement petits par rapport aux diamètres des pignons 60b et 62b, également identiques.

L'axe de chacun des pignons 60a, 60b, 62a et 62b est entraîné en rotation par une poulie crantée 64a, 64b, 66a et 66b, respectivement au travers d'un embrayage 68a, 68b, 70a et 70b. Ces embrayages peuvent être de tout type connu, et notamment électromagnétiques, pneumatiques ou hydrauliques.

Les poulies crantées 56, 64a et 64b sont disposées dans un même plan parallèle au plan du cadre 52, et elles sont reliées de façon opérante par une courroie crantée 72 dont l'agencement est tel qu'une rotation dans un sens de la poulie 56 entraîne une rotation dans le même sens des poulies 64a et 64b.

De façon comparable, les poulies crantées 58, 66a et 66b sont disposées dans un même plan légèrement décalé par rapport à celui des poulies 56, 64a et 64b. Une courroie crantée 74 relie également les poulies 58, 66a et 66b de façon opérante, de telle sorte qu'une rotation dans un sens de la poulie 58 entraîne une rotation dans le même sens des poulies 66a et 66b.

Dans l'agencement représenté, les poulies 56, 58, 64a, 64b, 66a et 66b sont toutes identiques.

La commande du mobile autonome ainsi réalisé peut être totalement programmée à l'avance, ou assurée à distance par un opérateur. Préférentiellement, cette commande est semi-automatique, c'est-à-dire que le déplacement du mobile selon une trajectoire rectiligne s'effectue automatiquement, alors que l'opérateur intervient pour commander la mise en route, l'arrêt et le changement de trajectoire.

Les différentes phases des mouvements assurant à la fois le déplacement du mobile suivant une trajectoire rectiligne et le déplacement de l'ensemble porte-outil à vitesse constante suivant cette même trajectoire vont maintenant être décrites.

Supposons que le mobile se trouve dans une position initiale dans laquelle les organes d'accrochage 30 du premier ensemble d'accrochage 10 sont activés et éloignés du cadre 24 sous l'action des vérins 32. Au contraire, les organes d'accrochage 48 du deuxième ensemble d'accrochage 12 sont désactivés et rapprochés du cadre 38 sous l'action des vérins 50. Le mobile est alors fixé à la surface par les organes d'accrochage 30 de l'ensemble 10.

Dans ces conditions, les embrayages 68a et 70b sont embrayés, alors que les embrayages 68b et 70a sont débrayés.

Le motoréducteur 54 est alors actionné de façon à entraîner en rotation dans le même sens et à vitesse constante les poulies 56 et 58.

Il est à noter que cet actionnement se poursuivra jusqu'à l'arrêt du mobile.

Compte tenu de la position occupée par les différents embrayages, seuls le petit pignon 60 a engrené sur la crémaillère 26a du premier ensemble d'accrochage 10 et le grand pignon 62b engrené sur la crémaillère 36b du deuxième ensemble d'accrochage 12 sont entraînés en rotation, dans le même sens et à la même vitesse. Par conséquent, l'ensemble porte-outil 14 se déplace à une vitesse relativement faible et dans un sens donné par rapport au premier ensemble d'accrochage 10, et le deuxième ensemble d'accrochage 12 se déplace dans le même sens et à une vitesse plus élevée, par rapport à l'ensemble porte-outil 14. Si l'on considère le déplacement du deuxième ensemble d'accrochage 12 par rapport au premier ensemble 10, qui constitue à ce moment la seule partie immobile du mobile, il s'effectue donc dans le même sens que celui de l'ensemble porte-outil 14, et à une vitesse qui est supérieure à deux fois la vitesse de déplacement de ce dernier ensemble.

Ce déplacement se poursuit de cette manière, jusqu'à ce que le deuxième ensemble d'accrochage 12 arrive en fin de course par rapport au premier ensemble d'accrochage 10. Cette situation peut notamment être détectée par un microcontact (non représenté). Il est à noter que l'ensemble porte-outil 14 n'est alors pas en fin de course par rapport au premier ensemble d'accrochage 10. Son déplacement dans le même sens et à la même vitesse relativement faible par rapport au premier ensemble d'accrochage 10 se poursuit donc, l'embrayage 68a restant embrayé et l'embrayage 68b débrayé.

Dans les conditions de fin de course précitées, l'embrayage 70b est débrayé et l'embrayage 70a embrayé. Par conséquent, le petit pignon 62a est à son tour entraîné en rotation à la même vitesse et dans le même sens que le pignon 60a. Il en résulte que le sens du déplacement du deuxième ensemble d'accrochage 12 par rapport à l'ensemble porte-outil 10 est inversé et que la vitesse de ce déplacement est égale à la vitesse de déplacement de l'ensemble porte-outil 14 par rapport au premier ensemble d'accrochage 10. Par rapport à ce dernier, qui est toujours fixé à la surface, le deuxième ensemble d'accrochage 12 est donc immobile.

Les vérins 50 sont alors mis en oeuvre pour amener les organes d'accrochage 48 en contact avec la surface. Les organes 48 sont ensuite activés, de sorte que le deuxième ensemble d'accrochage 12 est à son tour fixé sur la surface.

Dans ces conditions, les organes d'accrochage 30 du premier ensemble d'accrochage 10 sont désactivés et les vérins 32 sont ationnés pour effacer ces organes 30 en éloignement de la surface. La phase transitoire permettant de permuter les deux ensembles d'accrochage est alors terminée.

Une nouvelle phase de déplacement comparable à la première et dans laquelle les rôles des deux organes d'accrochage sont inversés intervient alors.

Afin de débuter cette nouvelle phase, l'embrayage 68a est débrayé et l'embrayage 68b est embrayé. Le premier ensemble d'accrochage 10 se déplace par conséquent à une vitesse relativement élevée selon la même direction et dans le même sens que l'ensemble porte-outil 14, qui continue de se déplacer à une vitesse relativement faible par rapport à la surface, sous l'effet de l'engrènement du petit pignon 62a sur la crémaillère 36a portée par le deuxième ensemble d'accrochage 12, qui est alors immobile par rapport à la surface. Le premier ensemble d'accrochage 10 se déplace donc dans le même sens que l'ensemble porte-outil 14 et à une vitesse supérieure au double de la vitesse de déplacement de ce dernier ensemble.

Lorsque le premier ensemble arrive en fin de course, l'embrayage 68b est débrayé et l'embrayage 68a embrayé, de sorte que le premier ensemble est immobilisé par rapport à la surface. Une nouvelle phase transitoire permettant de permuter les deux ensembles d'accrochage est alors effectuée.

L'avance du mobile selon une trajectoire rectiligne est ainsi assurée par une succession de phases d'avance au cours desquelles chacun des ensembles d'accrochage est à tour de rôle fixé sur la surface pendant que l'autre ensemble d'accrochage est projeté en avant, et de phases transitoires au cours desquelles s'effectue la permutation des deux ensembles d'accrochage, qui sont alors tous les deux immobiles par rapport à la surface.

Pendant cette avance et conformément à une caractéristique essentielle de l'invention, l'ensemble porte-outil se déplace selon la même trajectoire, à vitesse constante par rapport à la surface. Ce résultat est obtenu par le fait que l'ensemble porte-outil est entraîné en permanence par l'un au moins des petits pignons 60a et 62a qui sont en prise sur les crémaillères 26a ou 36a de l'ensemble d'accrochage 10 ou 12 qui est immobile par rapport à la surface.

Lorsque l'on désire changer l'orientation de la trajectoire du mobile et, par conséquent, de l'outil, on effectue, pendant la phase d'avance du mobile au cours de laquelle c'est le premier ensemble d'accrochage 10 qui est fixé sur la surface, une rotation de la partie 20 du deuxième ensemble d'accrochage 12. Cette rotation, commandée par l'actionnement du motoréducteur 44 est réalisée dans le sens et avec l'amplitude que l'on désire donner au changement d'orientation.

Après la phase transitoire, et au cours de la phase d'avance qui lui succède, le mobile est fixé sur la surface par la partie 20 du deuxième ensemble d'accrochage 12. On commannde alors, toujours à l'aide du motoréducteur 44, une rotation en sens inverse et de même amplitude de l'ensemble formé par la partie 18 du deuxième ensemble d'accrochage 12, l'ensemble porte-outil 14 et le premier ensemble d'accrochage 10. La modification de trajectoire est alors assurée, sans que la configuration du mobile s'en trouve modifiée et sans changement dans la vitesse de déplacement de l'ensemble porte-outil par rapport à la surface.

Il est à noter que la possibilité de modifier l'orientation de la trajectoire du mobile et, par conséquent, de l'outil, est facultative. Les parties 18 et 20 peuvent donc être remplacées par une pièce unique portant les pieds 46 et animée d'un seul mouvement de translation le long des glissières formées par les grands côtés 24a du cadre 24.

Par ailleurs, les moyens de commande particuliers 16 qui viennent d'être décrits peuvent être remplacés par tous moyens remplissant les mêmes fonctions. Ainsi, les systèmes pignons-crémaillères peuvent être remplacés par des systèmes courroies-poulies entraînées par l'intermédiaire d'embrayages. Par ailleurs, la différence de vitesse d'entraînement de l'ensemble porte-outil et des ensembles d'accrochage peut être otenue non pas en utilisant des pignons de diamètres différents, mais en utilisant des poulies de diamètres différents, des crémaillères à dentures différentes, etc.

## Revendications

1. Mobile autonome apte à déplacer un outil de travail sur une surface de forme et d'orientation quelconques, ce mobile comprenant:

    – deux ensembles d'accrochage (10, 12) coopérant entre eux par des moyens de guidage (24a) autorisant un déplacement relatif entre ces ensembles selon une direction donnée, chacun des ensembles d'accrochage portant des organes d'accrochage (30, 48) aptes à adhérer sur ladite surface et des moyens (32, 50) pour déplacer ces organes d'accrochage en rapprochement et en éloignenent de cette surface, et

    – un ensemble porte-outil (14) supporté par l'un (10) au moins des ensembles d'accrochage;

    ledit mobile étant caractérisé par le fait qu'il est apte à déplacer l'outil à vitesse constante, l'ensemble porte-outil (14) coopérant avec l'ensemble d'accrochage (10) qui le supporte par des moyens de guidage (24a) autorisant son déplacement selon ladite direction, ledit mobile comprenant de plus des moyens de commande (16) dont l'actionnement assure le passage du mobile dans deux états de déplacement successifs et répétitifs ; un premier de ces états, dans lequel les organes d'accrochage (30, 48) d'un seul des ensembles d'accrochage, dit fixe, adhèrent sur ladite surface, assurant un déplacement simultané de l'ensemble porte-outil (14) et de l'autre ensemble d'accrochage, dit mobile, dans ladite direction, respectivement à une vitesse relativement faible et à une vitesse relativement élevée, le deuxième état permettant de permuter les ensembles d'accrochage fixe et mobile du premier état, assurant une immobilisation relative des deux ensembles d'accrochage et un déplacement de l'ensemble porte-outil (14) dans ladite direction et à ladite vitesse relativement faible par rapport aux ensembles d'accrochage (10, 12).

2. Mobile autonome selon la revendication 1, caractérisé par le fait que la vitesse relativement élevée est au moins égale à deux fois la vitesse relativement faible.

3. Mobile autonome selon l'une quelconque des revendications 1 et 2, caractérisé par le fait que les moyens de commande (16) comprennent un organe moteur unique (54) porté par l'ensemble porte-outil (14), cet organe moteur actionnant, respectivement par l'intermédiaire de quatre embrayages (68a, 68b, 70a, 70b) un premier moyen d'entraînement (60a, 26a) assurant un déplacement relatif à ladite vitesse relativement faible entre un premier (10) des ensembles d'accrochage et l'ensemble porte-outil (14), un deuxième moyen d'entraînement (60a, 26a) assurant un déplacement relatif à ladite vitesse relativement élevée entre le premier ensemble d'accrochage (10) et l'ensemble porte-outil (14), un troisième moyen d'entraînement (62a, 36a) assurant un déplacement relatif à ladite vitesse relativement faible entre le deuxième ensemble d'accrochage (12) et l'ensemble porte-outil (14) et un quatrième moyen d'entraînement (62b, 36b) assurant un déplacement relatif à ladite vitesse relativement élevée entre le deuxième ensemble d'accrochage (12) et l'ensemble porte-outil (14) ; les déplacements commandés par le deuxième et le quatrième moyens d'entraînement s'effectuant en sens opposé par rapport aux déplacements commandés par le premier et le troisième moyens d'entraînement.

4. Mobile autonome selon la revendication 3, caractérisé par le fait que le premier et le deuxième moyens d'entraînement comprennent deux crémaillères opposées (26a, 26b), portées par le premier ensemble d'accrochage (10) selon ladite direction, et un premier et un deuxième pignons (60a, 60b) montés sur l'ensemble porte-outil (14) et engrenés respectivement sur ces crémaillères opposées, le troisième et le quatrième moyens d'entraînement comprenant deux autres crémaillères opposées (36a, 36b), portées par le deuxième ensemble d'accrochage (12) selon ladite direction et un troisième et un quatrième pignons (62a, 62b) montés sur l'ensemble porte-outil (14) et engrenés respectivement sur ces autres crémaillères opposées, l'organe moteur (54) entraînant ces quatre pignons à la même vitesse et dans le même sens, par des moyens de transmission de mouvement comportant les quatre embrayages (68a, 68b, 70a, 70b).

5. Mobile autonome selon la revendication 4, caractérisé par le fait que les moyens de transmission comprennent au moins une courroie (72, 74) entraînée par l'organe moteur (54) et passant sur quatre poulies (64a, 64b, 66a, 66b) supportées par l'ensemble porte-outil (14) et dont les axes entraînent respectivement lesdits pignons (60a, 60b, 62a, 62b) par l'intermédiaire des quatre embrayages (68a, 68b, 70a, 70b).

6. Mobile autonome selon l'une quelconque des revendications 4 et 5, caractérisé par le fait que le premier (60b) et le troisième (62b) pignons ont des diamètres identiques, supérieurs aux diamètres des deuxième (60a) et troisième (62a) pignons, également identiques.

7. Mobile autonome selon l'une quelconque des revendications 3 à 6, caractérisé par le fait que le premier ensemble d'accrochage (10) comprend un cadre rectangulaire rigide (24) dont les petits côtés (24b) portent lesdits organes d'accrochage (30) et dont les grands côtés (24a) portent les moyens de guidage du deuxième ensemble d'accrochage (12) et de l'ensemble porte-outil (14), le deuxième ensemble d'accrochage (12) comprenant également un cadre rectangulaire rigide (34) dont deux côtés opposés (34a) coopèrent avec les moyens de guidage du premier ensemble d'accrochage (10), la longueur de ces côtés opposés (34a) étant inférieure à la longueur des grands côtés (24a) du premier ensemble d'accrochage (10).

8. Mobile autonome selon l'une quelconque des revendications 3 à 7, caractérisé par le fait que le deuxième ensemble d'accrochage (12) comporte une partie mobile (18) selon ladite direction par rapport au premier ensemble d'accrochage (10) et une partie rotative (20) apte à tourner par rapport à la partie mobile (18) autour d'un axe perpendiculaire à ladite direction et à ladite surface, des moyens (22) étant prévus pour commander une rotation relative entre ces parties mobile (18) et rotative (20) autour dudit axe, lesdits organes d'accrochage (48) étant supportés par la partie rotative (20).

9. Mobile autonome selon la revendication 8, caractérisé par le fait que les moyens (22) pour commander la rotation relative comprennent un organe moteur (44) porté par ladite partie mobile (18), un pignon (42) entraîné par cet organe moteur, et une crémaillère ciculaire (40) centrée sur ledit axe, portée par ladite partie rotative (20) et sur laquelle s'engrène le pignon (42) porté par la partie mobile (18).

**Patentansprüche**

1. Selbständiges Mobil, das geeignet ist, ein Arbeitswerkzeug auf einer Oberfläche beliebiger Form und Orientierung zu bewegen, wobei dieses Mobil umfaßt:
– zwei Festhalteanordnungen (10, 12), die untereinander über Führungsvorrichtungen (24a) zusammenwirken, die eine relative Bewegung zwischen diesen Anordnungen entlang einer vorgegebenen Richtung erlauben, wobei jede dieser Festhalteanordnungen Festhalteorgane (30, 48), die geeignet sind, auf der Oberfläche zu haften und Vorrichtungen (32, 50) zum Bewegen dieser Festhalteorgane in Richtung einer Annäherung und einer Entfernung von dieser Oberfläche umfaßt, und
– eine Werkzeugträgeranordnung (14), die von wenigstens der einen der Festhalteanordnungen getragen wird, wobei das Mobil gekennzeichnet ist durch die Tatsache, daß es geeignet ist, das Werkzeug mit konstanter Geschwindigkeit zu bewegen, wobei die Werkzeugträgeranordnung (14) mit der Festhalteanordnung (10), die sie trägt, über Führungsvorrichtungen (24a) zusammenwirken, die ihre Bewegung in der besagten Richtung erlaubt, wobei das Mobil außerdem umfaßt:

Steuerungsvorrichtungen (16), deren Betätigung den Durchgang des Mobils durch zwei aufeinanderfolgende und sich wiederholende Bewegungszustände sicherstellt; wobei ein erster dieser Zustände, in dem die Festhalteorgane (30, 48) einer einzigen der Festhalteanordnungen, der sogenannten festen, auf der Oberfläche haften, eine gleichzeitige Bewegung der Werkzeugträgeranordnung (14) und der anderen Festhalteanordnung, der sogenannten beweglichen, in die besagte Richtung jeweils mit einer relativ geringen und einer relativ hohen Geschwindigkeit sicherstellt, und der zweite Zustand eine Vertauschung der festen und beweglichen Festhalteanordnungen des ersten Zustands erlaubt, wodurch eine relative Immobilisierung der beiden Festhalteanordnungen und eine Bewegung der Werkzeugträgeranordnung (14) in der besagten Richtung mit einer relativ geringen Geschwindigkeit bezüglich der Festhalteanordnungen sichergestellt wird.

2. Selbständiges Mobil nach Anspruch 1, gekennzeichnet durch die Tatsache, daß die relativ hohe Geschwindigkeit wenigstens gleich dem Zweifachen der relativ geringen Geschwindigkeit ist.

3. Selbständiges Mobil nach einem der Ansprüche 1 und 2, gekennzeichnet durch die Tatsache, daß die Steuerungsvorrichtungen (16) ein einziges Motorelement (54) umfassen, das von der Werkzeugträgeranordnung (14) getragen wird, wobei dieses Motorelement jeweils über vier Kupplungen (68a, 68b, 70a, 70b) eine erste Mitnahmevorrichtung (60a, 26a), die eine Relativbewegung mit der relativ geringen Geschwindigkeit zwischen einer ersten (10) der Festhalteanordnungen und der Werkzeugträgeranordnung (14) sicherstellt, eine zweite Mitnahmevorrichtung (60a, 26a), die eine Relativbewegung mit der relativ hohen Geschwindigkeit zwischen der ersten (10) der Festhalteanordnungen und der Werkzeugträgeranordnung (14) sicherstellt, eine dritte Mitnahmevorrichtung (62a, 36a), die eine Relativbewegung mit der relativ geringen Geschwindigkeit zwischen der zweiten (12) der Festhalteanordnungen und der Werkzeugträgeranordnung (14) sicherstellt, und eine vierte Mitnahmevorrichtung (62b, 36b) betreibt, die eine Relativbewegung mit der relativ hohen Geschwindigkeit zwischen der zweiten (12) der Festhalteanordnungen und der Werkzeugträgeranordnung (14) sicherstellt; wobei die von den zweiten und vierten Mitnahmevorrichtungen gesteuerten Bewegungen in entgegengesetzter Richtung bezüglich der von den ersten und dritten Vorrichtungen gesteuerten Bewegungen stattfinden.

4. Selbständiges Mobil nach Anspruch 3, gekennzeichnet durch die Tatsache, daß die erste und zweite Mitnahmevorrichtungen zwei entgegengesetzte Zahnstangen (26a, 26b), die von der ersten Festhalteanordnung (10) entlang der besagten Richtung gehalten werden, und ein erstes und ein zweites Ritzel (60a, 60b) umfassen, die auf der Werkzeugträgeranordnung (14) montiert sind und jeweils in die entgegengesetzten Zahnstangen greifen, wobei die dritte und vierte Mitnahmevorrichtungen zwei entgegengesetzte Zahnstangen (36a, 36b), die von der zweiten Festhalteanordnung (12) entlang der besagten Richtung gehalten werden, und ein drittes und ein viertes Ritzel (62a, 62b) umfassen, die auf der Werkzeugträgeranordnung (14) montiert sind und jeweils in die anderen, entgegengesetzten Zahnstangen greifen, wobei das Motorelement (54) diese vier Ritzel mit derselben Geschwindigkeit und in derselben Richtung über Bewegungsübertragungsvorrichtungen, die die vier Kupplungen (68a, 68b, 70a, 70b) umfassen, bewegt.

5. Selbständiges Mobil nach Anspruch 4, gekennzeichnet durch die Tatsache, daß die Übertragungsvorrichtungen wenigstens einen von dem Motororgan (54) angetriebenen Treibriemen (72, 74) umfassen, der über vier Rollen (64a, 64b, 66a, 66b) läuft, die von der Werkzeugträgeranordnung (14) getragen werden und deren Achsen jeweils die Ritzel (60a, 60b, 62a, 62b) über vier Kupplungen (68a, 68b, 70a, 70b) antreiben.

6. Selbständiges Mobil nach einem der Ansprüche 4 und 5, gekennzeichnet durch die Tatsache, daß die ersten (60b) und dritten (62b) Ritzel identische Durchmesser besitzen, die größer sind als die Durchmesser der zweiten (60a) und vierten (62a) Ritzel, die ebenfalls identisch sind.

7. Selbständiges Mobil nach einem der Ansprüche 3 bis 6, gekennzeichnet durch die Tatsache, daß die erste Festhalteanordnung (10) einen rechtwinkligen, steifen Rahmen (24) umfaßt, dessen Schmalseiten (24b) die Festhalteelemente (30) und dessen Breitseiten (24a) die Führungsvorrichtungen für die zweite Festhaltevorrichtung (12) und die Werkzeugträgervorrichtung (14) tragen, wobei die zweite Festhalteanordnung (12) ebenfalls einen rechtwinkligen, steifen Rahmen (34) umfaßt, von dem zwei gegenüberliegende Seiten (34a) mit den Führungsvorrichtungen für die erste Festhalteanordnung (10) zusammenarbeiten, wobei die Länge dieser gegenüberliegenden Seiten (34a) geringer ist als die Länge der Breitseiten (24a) der ersten Festhalteanordnung (10).

8. Selbständiges Mobil nach einem der Ansprüche 3 bis 7, gekennzeichnet durch die Tatsache, daß die zweite Festhalteanordnung (12) einen entlang der besagten Richtung bezüglich der ersten Festhalteanordnung (10) beweglichen Teil und einen drehbaren Teil (20) aufweist, der geeignet ist, sich bezüglich des beweglichen Teils (18) um eine Achse senkrecht zur besagten Richtung und zu der Oberfläche zu drehen, wobei Vorrichtungen (22) vorgesehen sind, um eine Relativdrehung zwischen diesen beweglichen (18) und drehbaren (20) Teilen um die Achse zu steuern, wobei die Festhalteelemente (48) von dem drehbaren Teil (20) getragen werden.

9. Selbständiges Mobil nach Anspruch 8, gekennzeichnet durch die Tatsache, daß die Vorrichtung (22) zum Steuern der Relativdrehung ein Motorelement (44), das von dem beweglichen Teil (18) getragen wird, ein Ritzel (42), das von diesem Motorelement angetrieben wird und eine kreisförmige Zahnstange (40) umfassen, die um diese Achse zentriert ist und von dem drehbaren Teil (20) getragen wird und in die das von dem beweglichen Teil (18) getragene Ritzel (42) greift.

## Claims

1. Autonomous moving body able to move a working tool over a surface having a random shape and orientation, comprising:

– two attachment assemblies (10, 12) cooperating with one another by guidance means (24a) authorizing a relative displacement between said assemblies in a given direction, each of the attachment assemblies carrying attachment members (30, 48) able to adhere to the said surface and means (32, 50) for displacing these attachment members on moving towards and away from said surface; and

– a tool holder assembly (14) supported by at least one (10) of the attachment assemblies;

said moving body being characterized in that it is able to move the tool at a constant speed, the tool holder assembly cooperating with the attachment assembly which it supports by guidance means (24a) authorizing its displacement in said direction; and said moving body also comprising control means (16), whose operation ensures the passage of the moving body into two successive and repetitive displacement states; a first of these states, in which the attachment members (34, 48) of only one of the attached assemblies and said to be fixed, adheres to the said surface and ensures a simultaneous displacement of the tool holder assembly (14) and the other attachment assembly, said to be mobile in the said direction and respectively at a relatively low speed and a relatively high speed; the second state making it possible to interchange the fixed and mobile attachment assemblies (10, 12) of the first state, ensuring a relative immobilization of the two attachment assemblies and the displacement of the tool holder assembly (14) in said direction and at said relatively low speed with respect to the attachment assemblies (10, 12).

2. Autonomous moving body according to claim 1, wherein the relatively high speed is at least equal to twice the relatively low speed.

3. Autonomous moving body according to claim 1, wherein the control means comprise a single motor member carried by the tool holder assembly, said motor member actuating, respectively via four clutched, a first drive means ensuring a relative displacement at said relatively low speed between a first of the attachment assemblies and the tool holder assembly, a second drive means ensuring a relative displacement at said relatively high speed between the first attachment assembly and the tool holder assembly, a third drive means ensuring a relative displacement at said relatively low speed between the second attachment assembly and the tool holder assembly and a fourth drive means ensuring a relative displacement at said relatively high speed between the second attachment assembly and the tool holder assembly, the displacements controlled by the second and fourth drive means taking place in opposite directions compared with the displacements controlled by the first and third drive means.

4. Autonomous moving body according to claim 3, wherein the first and second drive means comprise two opposite racks carried by the first attachment assembly in accordance with said direction, and a first and a second pinions mounted on the tool holder assembly and respectively geared on the opposite racks, the third and fourth drive means incorporating two other opposite racks, carried by the second attachment assembly in accordance with said direction and a third and a fourth pinions mounted on the tool holder assembly and respectively geared on said other opposite racks, the motor member driving these four pinions at the same speed and in the same direction by movement transmission means incorporating the four clutches.

5. Autonomous moving body according to claim 4, wherein the transmission means comprise at least one belt driven by the motor member and passing over four pulleys supported by the tool holder assembly and whereof the spindles respectively drive said pinions via four clutches.

6. Autonomous moving body according to claim 4, wherein the first and third pinions have identical diameters larger than the diameters of the second and third pinions, which are also identical.

7. Autonomous moving body according to claim 3, wherein the first attachment assembly comprises a rigid rectangular frame, whose small sides carry said attachment members and whose large sides carry the guidance means for the second attachment assembly and the tool holder assembly, the second attachment assembly also having a rigid rectangular frame, whereof two opposite sides cooperate with the guidance means of the first attachment assembly, the length of said opposite sides being less than the length of the large sides of the first attachment assembly.

8. Autonomous moving body according to claim 3, wherein the second attachment assembly has a part moving in accordance with said direction with respect to the first attachment assembly and a rotary port able to rotate with respect to the moving part about an axis perpendicular to said direction and to said surface, means being provided to control a relative rotation between said having and rotary parts about said axis, said attachment members being supported by the rotary part.

9. Autonomous moving body according to claim 8, wherein the means for controlling the relative rotation incorporate a motor meber carried by said moving part, a pinion driven by said motor member and a circular rack centered on said axis, carried by said rotary part and on which gears the pinion carried by the moving part.

FIG. 1

FIG.2

FIG.3

# FIG. 4